# EUROPÄISCHE PATENTANMELDUNG

(11) **EP 3 745 243 A1**
(43) Veröffentlichungstag der Anmeldung: **02.12.2020**
(21) Anmeldenummer: 19177740.8
(22) Anmeldetag: 31.05.2019
(51) Int. Cl.: G06F 3/12, H04L 12/24

(54) **VERFAHREN ZUR ERFASSUNG UND VERARBEITUNG VON TECHNISCHEN DATEN, INSBESONDERE MIB-BASIERTE OID-WERTE, MIT EINEM MOBILEN ENDGERÄT**

(71) Anmelder: Denk, Martin, 76185 Karlsruhe (DE)
(72) Erfinder: Denk, Martin, 76185 Karlsruhe (DE)
(74) Vertreter: Geitz Truckenmüller Lucht Christ

(57) **Zusammenfassung**

Die Erfindung betrifft ein Verfahren, das sich dadurch auszeichnet, dass technischen Informationen, bevorzugt OID-Werte (10), von Druckgeräten (1) innerhalb eines lokalen Netzwerkes (7) mittels UDP/SNMP-Protokollen (6) auf wenigstens ein mobiles Endgerät (11), insbesondere auf eine auf wenigstens einem mobilen Endgerät (11) installierte App (5), übertragbar sind, welches sich zum Zeitpunkt der Übertragung der technischen Informationen, bevorzugt OID-Werte (10), innerhalb eines lokalen Netzwerkes (7) befindet, wobei diese technischen Informationen, bevorzugt OID-Werte (10), an eine private Cloud (2) übersendbar sind, welche einen zentralen Erfassungsclient (4), welcher explizit die OID Werten über die App, MIB - Baum gesteuert, anfordert und einem MPS-Server (3) umfasst, so dass innerhalb dieser privaten Cloud (2) die zuvor gesammelten und übersendeten technischen Informationen der Druckgeräte (1), bevorzugt OID-Werte (10), auswertbar und speicherbar sind, so dass selbsttätig Handlungsanweisungen, zur Abfrage weiterer technischer Informationen, bevorzugt OID-Werten (10), durchführbar sind.

## Beschreibung

Die Erfindung betrifft ein Verfahren zur Erfassung und Verarbeitung von technischen Daten, insbesondere MIB-Daten basierte OID-Werte, mit Hilfe eines mobilen Endgeräts.

In diesem Zusammenhang ist aus dem Stand der Technik, gemäß dem deutschen Patent DE 10 2010 016 858 A1 ein Verfahren zum Überwachen eines Drucksystems offenbart, welche sich dadurch auszeichnet, dass ein Mikroprozessorsystem, an welches mindestens ein Drucksystem gekoppelt ist, Informationen zum Betrieb des Drucksystems mittels eines Filters auswählt, so dass das Mikroprozessorsystem elektronische Nachrichten erstellt, die die geschilderten Informationen umfassen, so dass das Mikroprozessorsystem die elektronischen Nachrichten über ein Datennetzwerk an ein so genanntes WAN (WAN= Wide Area Network)-basiertes Logbuch, eines vom Mikroprozessorsystem unabhängigen Computers, sendet, wobei dass WAN-basierte Logbuch eine bestimmte Adresse besitzt, durch die das Mikroprozessorsystem die elektronischen Nachrichten an das WAN-basierte Logbuch übermitteln kann und so die elektronischen Nachrichten auf dem unabhängigen Computer abgespeichert werden können.

Weiterhin betrifft das europäische Patent EP 98 301 829.2 ein Verfahren zum Einsatz mit einem Drucksystem, das einen Client und eine Gruppe einer oder mehrerer druckbezogener Vorrichtungen enthält, wobei sowohl der Client als auch die Gruppe einer oder mehrerer druckbezogener Vorrichtung kommunizierend mit einem Netzwerk verbunden sind, wobei jede der einem oder mehreren druckbezogenen Vorrichtungen ein Netzwerkprotokoll einsetzt, um mit dem Client zu kommunizieren, und jede der einen oder mehreren druckbezogenen Vorrichtungen mit einem Registrierdienst registriert wird und der Registrierdienst Konfigurationsinformationen bezüglich jeder der einen oder mehreren druckbezogenen Vorrichtung speichert, wobei durch den Einsatz des Netzwerkprotokolles und der gespeicherten Konfigurationsinformationen der Client in die Lage versetzt wird, mit jeder druckbezogenen Vorrichtung zu kommunizieren, um druckbezogene Informationen zwischen Ihnen zu übertragen.

Auch das europäische Patent EP 1 679 821 B1 offenbart ein Verfahren zum Extrahieren von Informationen, die einer über ein Netz angeschlossenen überwachten Vorrichtung zugeordnet sind, unter Verwendung eines SNMP-Protokolls. Das Verfahren umfasst dabei, das Zugreifen auf einen internen Speicher, um Informationen zu erhalten, um auf die überwachte Vorrichtung zuzugreifen, wobei die Zugriffsinformationen einen Typ von Statusinformationen beinhaltet, die es erforderlich macht, einen bestimmten Zugriffsstring zu verwenden, um den Typ von Statusinformation der überwachten Vorrichtung zu erhalten.

Des Weiteren wird über ein syntaktisches Analysieren des Zugriffsstrings, festgestellt, ob der Zugriffsstring leer ist, und ob der Zugriffsstring einen ersten vorgegebenen String enthält. Wenn der Zugriffsstring nicht leer ist, sowie falls der Schritt des syntaktischen Analysierens feststellt, dass der Zugriffsstring nicht leer ist und dass der Zugriffsstring den ersten vorgegebenen Inhalt enthält, auf die Vorrichtung unter Verwendung einer ersten SNMP-Zugriffsfunktion zugreift, um einen Wert zu erhalten, wird der Inhalt dem Typ von Statusinformationen zugeordnet. Falls der Schritt des syntaktischen Analysieren feststellt, dass der Zugriffsstring leer ist oder dass der Zugriffsstring den ersten vorgegebenen String nicht enthält, wird dann auf die Vorrichtung unter Verwendung einer zweiten SNMP - Funktion zugegriffen, um den Wert, der den Typ von Statusinformationen zugeordnet ist, zu erhalten. Dabei umfassen die Schritte des Zugreifens auf den internen Speicher den Vorgang, um Objektidentifizierer- oder OID-Informationen zu erhalten, die dem Typ von Statusinformationen entsprechen, die von der überwachten Vorrichtung erwartet und erhalten werden sollen.

Ausgehend von diesem Stand der Technik liegt der Erfindung die Aufgabe zu Grunde, mittels eines mobilen Endgeräts, die technischen Informationen innerhalb eines lokalen Netzwerkes zu erfassen und auszuwerten. Dies wird mit dem geltenden Anspruch 1 gelöst, wobei die abhängigen Ansprüche 2 bis 9 vorteilhafte Ausgestaltungen der Erfindung sind.

Gemäß dem Oberbegriff des geltenden Anspruchs 1 ist aus dem Stand der Technik, ein Verfahren zur Abfrage von technischen Informationen von Druckgeräten vorbekannt. Diese technischen Informationen werden an einen Erfassungsclienten übermittelt, welcher ein Datensammler, bevorzugt mit integrierter Datenbank, ist, wobei die gesammelten Informationen an eine zentrale Datenverarbeitungseinheit, insbesondere einer privaten Cloud, zu welcher Dritte keine Zugriffsberechtigung haben, übersendbar sind.

Die technischen Informationen und oder auch Statusmeldungen von Druckgeräten sind in Form von OID-Werten (OID=Objekt-Identifier) im Druckgerät hinterlegt, wobei diese in einem hierarchischem Namensbaum, auch unter Verwendung von Verzweigungsknoten hinterlegt sind. Die Struktur der OID Bäume werden als MIB-Informationen (MIB= Management-Information-Base) bezeichnet und ermöglichen durch deren Anwendung das Erfassen der Inhalte, der sogenannten OID-Werte. Dadurch wird ermöglicht, dass Geräte, die an ein lokales Netzwerk angeschlossen sind, dahingehend erweitert nutzbar gemacht werden, indem eine Gesamtüberwachung der Druckgeräte auf Ihre Funktionalitäten ermöglicht wird.

Die Erfindung zeichnet sich dadurch aus, dass die technischen Informationen, bevorzugt OID-Werte, von Druckgeräten innerhalb eines lokalen Netzwerkes mittels UDP/SNMP-Protokollen (UDP= User-Datagramm-Protokoll, SNMP=Simple-Network-Management), auf wenigstens ein mobiles Endgerät, insbesondere auf einer, auf wenigstens einem mobilen Endgerät installierten App, übertragbar sind, welche sich zum Zeitpunkt der Übertragung der technischen Informationen, bevorzugt OID-Werte, innerhalb eines lokalen Netzwerkes befinden.

Bei UDP/SNMP-Protokollen handelt es sich um ein Netzwerk-Protokoll zur Versendung von Datagrammen (= eine in sich geschlossene, unabhängige Dateneinheit, die ohne weitere Verbindungssicherung zwischen zwei Endpunkten verschickt wird) innerhalb eines Netzwerkes respektive, um ein Protokoll, welches Netzwerkelemente, insbesondere Drucker, von einer zentralen Einheit aus überwachbar und steuerbar macht.

Die besorgten technischen Informationen, bevorzugt OID-Werte, sind an eine private Cloud sendbar, wobei diese einen zentralen Erfassungsclient und einen MPS-Server (MPS= Management-Print-Service) umfasst, wobei letzterer ein System darstellt, welches die technischen Geräteinformationen, die über einen Erfassungsclient innerhalb eines lokalen Netzwerkes, insbesondere von Drucksystemen, abfragt, statistisch auswertet und gegebenenfalls automatisierte Servicesteuerungen vornehmen kann.

Diese gesendeten technischen Informationen, etwa betreffend den Status der Druckgeräte, bevorzugt OID-Werte, sind innerhalb der privaten Cloud auswertbar und speicherbar, so dass basierend auf diesen Auswertungen, selbsttätig Handlungsanweisungen, insbesondere die Abfrage weiterer technischer Informationen, bevorzugt OID-Werten, durchführbar sind.

In vorteilhafter Ausgestaltung setzt das Verfahren einen zentralen Erfassungsclienten ein, welcher bevorzugt innerhalb der privaten Cloud angeordnet ist, und die von wenigstens einem mobilen Endgerät, insbesondere von einer auf wenigstens einem mobilen Endgerät installierten App, technischen Informationen, bevorzugt OID-Werte anfordert, sammelt und auswertet, um insbesondere weitere Abfragen zu OID-Werten, an eine auf wenigstens einem mobilen Endgerät installierte App, weiterleitet. Dabei findet dieser zyklische Datenaustausch so lange statt, bis die benötigten OID-Werte für eine vollständige Analyse vorliegen.

Hiervon ausgehend, sieht die Erfindung gemäß Anspruch 3 folgende weitere Verfahrensschritte vor. Der Gegenstand der Erfindung umfasst zusätzlich einen MPS-Server, welcher innerhalb einer privaten Cloud angeordnet ist und die vom Erfassungsclient gesammelten und erfassten OID-Werte, empfängt und basierend auf den ihm zugesendeten OID-Werte, selbsttätig statistische Auswertungen vornimmt, so dass hieraus Handlungsanweisungen ableitbar sind, insbesondere zu Servicesteuerungen.

In weiterer vorteilhafter Ausgestaltung der Erfindung ist die private Cloud sowohl extern, insbesondere über einen Cloudanbieter, als auch intern, vorzugsweise innerhalb des lokalen Netzwerkes, betreibbar.

Gemäß Anspruch 5, sieht die Erfindung in vorteilhafter Ausgestaltung vor, sowohl öffentliche MIB-Daten, wodurch einheitliche OID-Werte abfragbar sind, als auch private MIB-Daten, wodurch hersteller- und gerätespezifische OID-Werte abfragbar sind, vorzuhalten, so dass individuelle Abfragen und/oder Verarbeitungen der empfangenen und/oder gesendeten OID-Werte, in einer privaten Cloud, insbesondere auf einem Erfassungsclient, durchführbar sind.

Eine abermals vorteilhafte Ausgestaltung der Erfindung sieht vor, dass nachdem die App alle im lokalen Netzwerk erkannten Druckgeräteinformationen, bevorzugt OID-Werte, an den zentralen Erfassungsclient übermittelt hat, dieser der App die gerätespezifischen OID-Abfragen unter Verwendung der gerätespezifischen MIB-Daten mitteilt, so dass die auf wenigstens einem mobilen Endgerät installierte App die im lokalen Netzwerk befindlichen Druckgeräte über UDP/SNMP-Protokolle abfragt, um zyklisch je nach MIB-Daten des jeweiligen Gerätes und der jeweiligen OID-Werte, diese dann an den zentralen Erfassungsclient über ein Webinterface übermittelt, welcher dann je nach OID-Werte zyklisch erneute OID-Abfragen an die lokale App sendet, solange, bis basierend auf den entsprechenden OID-Werten, die gesamten gerätespezifischen MIB-Daten vollständig abgefragt sind.

Gemäß Anspruch 7, sieht die Erfindung vor, dass die Kommunikation zwischen einer auf wenigstens einem mobilen Endgerät installierten App, und einer privaten Cloud, welche insbesondere mit Hilfe des zentralen Erfassungsclients zur Steuerung der OID-Abfragen und Übergabe der OID-Werten dient, über ein Webinterface stattfindet.

In weiterer Ausgestaltung der Erfindung befindet sich innerhalb der App eine Firewall, welche die Kommunikation innerhalb des lokalen Netzwerkes zur Abfrage der OID-Werte über UDP/SNMP-Protokolle und dem Webinterface, welches die OID-Werte an die zentrale private Cloud weitergibt, strickt trennt, so dass keine direkte Kommunikation zwischen dem lokalen Netzwerk und dem Webinterface zur privaten Cloud stattfindet, welche wenigstens auf einem mobilen Endgerät installierten ist.

Gemäß Anspruch 9 der Erfindung, befindet sich innerhalb der App, welche auf wenigstens einem mobilen Endgerät installiert ist, eine Anzeige, die die Geräteinformationen nach Abfrage der OID-Werte der Druckgeräte, insbesondere in Form von der aktuellen Tonerfüllmenge, bereitstellt, so dass basierend auf diesen technischen Informationen, insbesondere OID-Werte, Handlungsanweisungen, insbesondere das bestellen von Tonerkartuschen und/oder Beauftragung von Servicetätigkeiten, durchführbar sind.

Die Erfindung wird nachstehend anhand eines in den Zeichnungen dargestellten Ausführungsbeispiels näher erläutert.

Es zeigen:
- Fig. 1: :das Verfahren zur Erfassung technischer Informationen innerhalb eines lokalen Netzwerkes und Übertragung dieser an eine Cloud, sowie
- Fig. 2: die App gemäß Fig. 1 in Detailansicht zur Erfassung technischer Informationen innerhalb eines lokalen Netzwerkes und Übertragung dieser an eine Cloud.

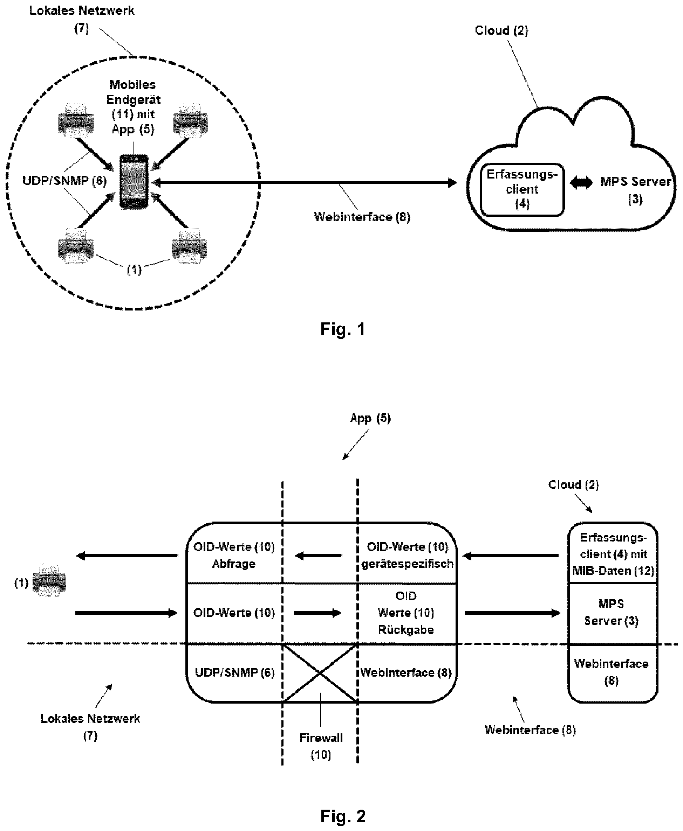

Figur 1 zeigt das Verfahren gemäß dem geltenden Anspruch 1 der Erfindung, bei dem innerhalb eines lokalen Netzwerkes 7 über UDP/SNMP-Protokolle 6 die technischen Informationen der Druckgeräte 1 in Form von OID-Werten 10 an wenigstens ein mobiles Endgerät 11, bevorzugt auf die auf dem mobilen Endgerät 11 vorhandene App 5, übertragen werden. Die so erhaltenen OID-Werte 10 sind mittels einem Webinterface 8 zwischen dem mobilen Endgerät 11, insbesondere der auf dem mobilen Endgerät 11 vorhandenen App 5, und der privaten Cloud 2 übertragbar, wobei die bevorzugten OID-Werte 10 vom Erfassungsclient 4 erfasst und ausgewertet werden, um ggf. weitere Abfragen zu technischen Informationen in Form von den bevorzugten OID-Werten 10 über das Webinterface 8 an die App 5 durchzuführen. Liegen alle technischen Informationen, bevorzugt als OID-Werte 10, vor, so werden die so gesammelten technischen Informationen, an einen MPS-Server 3, welcher innerhalb der privaten Cloud 2 bereitsteht, über eine Schnittstelle zwischen zentralem Erfassungsclient und MPS Server weiteregegeben. Dieser MPS-Server 3 kann anschließend basierend auf den ihm zugesandten technischen Informationen, bevorzugt OID-Werte 10, selbsttätig Handlungsanweisungen geben.

Figur 2 zeigt die auf dem mobilen Endgerät 11 vorhandene App 5 in Detailansicht. Der zentrale Erfassungsclient 4 stellt die zur Abfrage benötigten OID-Werte 10 der App 5 mittels des Webinterfaces 8 zur Verfügung. Die darauffolgend, durch die Abfrage über das UDP/SNMP-Protokoll 6 innerhalb des lokalen Netzwerkes 7, erhaltenen OID-Werte 10, werden wiederum mittels eines Webinterfaces 8 zurück an den Erfassungsclient 4 innerhalb der privaten Cloud 2 übermittelt. Die beiden Kommunikationsarten, also das UDP/SNMP-Protokoll 6 sowie das Webinterface 8, sind hierbei über eine Firewall 9 innerhalb der App 5 voneinander getrennt.

Vorstehend ist somit ein Verfahren beschrieben, dass erlaubt mittels eines mobilen Endgeräts 11 mit einer installierten App 5, welche eine Firewall 9 enthält, die OID-Werte 10 der im lokalen Netzwerk 7 vorhandenen Druckgeräte 1 abzufragen, so dass diese über ein Webinterface 8 an eine private Cloud 2 gesendet werden. Dabei steuert der zentrale Erfassungsclient 4 mit Hilfe seiner Geräte spezifischen MIB-Baum-Informationen 12 die OID-Abfragen 10 der App 5 gerätespezifisch, welche sich im lokalen Netzwerk 7 befindet vollständig und je nach schrittweiser Rückgabe von einzelnen OID-Werten 10 und deren Inhalte an den zentralen Erfassungsclient 4 zyklisch, um basierend auf den OID-Werten 10 die komplette MIB-Baum-Struktur und deren Knoten jedes Drucksystems vollständig erfassen zu können. Die gesendeten OID-Werte 10 sind anschließend mit Hilfe eines Erfassungsclienten 4 sowie eines MPS-Servers 3, welche die private Cloud 2 umfasst, verarbeitbar und auswertbar, so dass schließlich Handlungsanweisungen basierend auf den ausgewerteten OID-Werten 10 erfolgen.

### BEZUGSZEICHENLISTE

- 1: Druckgerät
- 2: Cloud
- 3: Managed Print Service (MPS) - Server
- 4: Erfassungsclient
- 5: App
- 6: UDP/SNMP-Protokoll
- 7: Lokales Netzwerk
- 8: Webinterface
- 9: Firewall
- 10: OID-Werte
- 11: Mobiles Endgerät
- 12: MIB-Daten

## Patentansprüche

1. Verfahren zur Abfrage von technischen Informationen von Druckgeräten (1) und Übermittlung dieser Informationen an einen Erfassungsclienten (4), welcher ein Datensammler, bevorzugt mit integrierter Datenbank, ist, wobei die gesammelten Informationen an eine zentrale Datenverarbeitungseinheit, insbesondere einer privaten Cloud (2), zu welcher Dritte keine Zugriffsberechtigung haben, übersendbar sind, wobei die technischen Informationen von Druckgeräten (1) in Form von OID-Werten (10) (OID=Objekt-Identifier), welche Knoten in einem hierarchischem Namensraum darstellen, erfassbar sind und mittels MIB-Daten (12) (MIB= Management-Information-Base), die eine Beschreibung mit Management-Informationen darstellen, um Geräte die an ein lokales Netzwerk (7) angeschlossen sind, nutzbar zu machen, insbesondere steuerbar und konfigurierbar, auswertbar sind,
**dadurch gekennzeichnet, dass**
die technischen Informationen, bevorzugt OID-Werte (10), von Druckgeräten (1) innerhalb eines lokalen Netzwerkes (7) mittels UDP/SNMP-Protokollen (6) (UDP= User-Datagramm-Protokoll, SNMP=Simple-Network-Management), wobei es sich um ein Netzwerk-Protokoll zur Versendung von Datagrammen innerhalb eines Netzwerkes respektive, um ein Protokoll, welches Netzwerkelemente, insbesondere Drucker, von einer zentralen Einheit vorzugsweise überwachbar und steuerbar macht, handelt, auf wenigstens ein mobiles Endgerät (11), insbesondere auf eine auf wenigstens einem mobilen Endgerät (11) installierte App (5), übertragbar sind, welches sich zum Zeitpunkt der Übertragung der technischen Informationen, bevorzugt OID-Werte (10), innerhalb eines lokalen Netzwerkes (7) befindet, wobei diese empfangenen technischen Informationen, bevorzugt OID-Werte (10), von diesem mobilen Endgerät, insbesondere von einer auf wenigstens diesem mobilen Endgerät (11) installierten App (5), an eine private Cloud (2), welche einen zentralen Erfassungsclient (4) und einem MPS-Server (3) (MPS= Management-Print-Service) umfasst, übersendbar sind, wobei letzteres ein System darstellt, welches technische Informationen, bevorzugt OID-Werte (10), innerhalb eines lokalen Netzwerkes (7) von Geräten, insbesondere Druckern (1), abfragt, damit statistische Auswertungen vornehmbar sind, so dass innerhalb dieser privaten Cloud (2) die gesammelten und übersendeten technischen Informationen, bevorzugt OID-Werte (10), der Druckgeräte (1), auswertbar und speicherbar sind, so dass selbsttätig Handlungsanweisungen, insbesondere die Abfrage weiterer technischer Informationen, bevorzugt OID-Werte (10), durchgeführt werden.

2. Verfahren nach Anspruch 1, **dadurch gekennzeichnet, dass** ein zentraler Erfassungsclient (4) enthalten ist, welcher mit Hilfe von MIB-Daten (12) OID-Abfragen über eine App (5) durchführt, die auf wenigstens einem mobilen Endgerät (11) installiert ist, zentral durch den Erfassungsclient (4) steuerbar ist, so dass in der App (5) die OID-Werte (10) gesammelt und an den zentralen Erfassungsclient (4) über ein Webinterface (8) zur Auswertung zurückübertragbar und im zentralen Erfassungsclient (4) auswertbar ist, um insbesondere weitere Abfragen, ausgehend von einem Erfassungsclient (4) basierend auf den MIB-Daten (12) und den bereits erhaltenen OID-Werten (10), anhand möglicher Knoten zu OID-Werten (10), an eine auf wenigstens einem mobilen Endgerät (11) installierte App (5), weiterleitet, um weitere OID-Werte (10) über die App (5) an den Erfassungsclient (4) zurückmeldet, so dass dieser Datenaustausch so lange stattfindet, bis alle benötigten OID-Werte (10) für weitere Handlungen vorliegen.

3. Verfahren nach einem oder mehreren vorangegangenen Ansprüchen,
**dadurch gekennzeichnet, dass** ein MPS-Server (3) innerhalb einer privaten Cloud (2), welcher die vom zentralen Erfassungsclient (4) gesammelten und weitergeleiteten OID-Werte (10), empfängt und das basierend auf den ihm zugesendeten OID-Werte (10), statistische Auswertungen stattfinden, so dass insbesondere Servicesteuerungen, durchführbar sind, enthalten ist.

4. Verfahren nach einem oder mehreren vorangegangenen Ansprüchen,
**dadurch gekennzeichnet, dass** die private Cloud (2) sowohl extern, insbesondere über einen Cloudanbieter, als auch intern, vorzugsweise innerhalb des lokalen Netzwerkes (7), betreibbar ist.

5. Verfahren nach einem oder mehreren vorangegangenen Ansprüchen,
**dadurch gekennzeichnet, dass** sowohl öffentliche MIB-Daten (12), wodurch einheitliche OID-Werte (10) abfragbar sind, als auch private MIB-Daten (12), wodurch hersteller- und gerätespezifischen OID-Werte (10) abfragbar sind, vorhanden sind, so dass individuelle Abfragen und/oder Verarbeitungen der empfangenen und/oder gesendeten OID-Werte (10), in einer privaten Cloud (2), insbesondere auf einem Erfassungsclient (4), durchführbar sind.

6. Verfahren nach einem oder mehreren vorangegangenen Ansprüchen,
**dadurch gekennzeichnet, dass** nachdem der zentrale Erfassungsclient (4) anhand der gerätespezifischen MIB-Daten (12) die OID-Abfragen an die App (5) weitergeleitet hat, daraufhin die gerätespezifischen OID-Werte (10), abgefragt werden und durch wenigstens ein mobiles Endgerät (11), insbesondere innerhalb der auf wenigstens einem mobilen Endgerät (11) installierten App (5), erhalten werden, so dass aufgrund der OID-Werte (10) im Vergleich zu den MIB-Daten (12) erneute OID-Abfragen vom zentralen Erfassungsclient (4) an die App (5) dynamisch unter der Berücksichtigung von MIB-Daten (12) zyklisch solange automatisch erfolgen, bis alle gerätespezifischen OID-Werte aus dem lokalen Netzwerk (7) über die mobile App (5) an den zentralen Erfassungsclient (4) zurückübergeben wurden.

7. Verfahren nach einem oder mehreren vorangegangenen Ansprüchen,
**dadurch gekennzeichnet, dass** die Kommunikation zwischen wenigstens einem mobilen Endgerät (11), insbesondere zwischen einer auf wenigstens einem mobilen Endgerät (11) installierte App (5), und einer privaten Cloud (2), welche zur Übergabe von OID-Werte (10) dient, über ein Webinterface (8) stattfindet.

8. Verfahren nach einem oder mehreren vorangegangenen Ansprüchen,
**dadurch gekennzeichnet, dass** zwischen dem lokalen Netzwerk (7) und dem Webinterface (8) eine Firewall (9) enthalten ist, so dass keine direkte Kommunikation zwischen dem lokalen Netzwerk (7) und dem Webinterface (8) innerhalb wenigstens einem mobilen Geräts (11), insbesondere innerhalb einer auf wenigstens einem mobilen Geräts (11) installierte App (5), stattfindet.

9. Verfahren nach einem oder mehreren vorangegangenen Ansprüchen,
**dadurch gekennzeichnet, dass** innerhalb der App (5), welche auf wenigstens einem mobilen Endgerät (11) installiert ist, eine Anzeige enthalten ist, die die individuellen Geräteinformationen nach Abfrage der OID-Werte (10), insbesondere in Form von der aktuellen Tonerfüllmengen, Zählerstände, Fehlermeldungen und alle gerätespezifischen OID-Werte (10) bereitstellt, so dass basierend auf diesen OID-Werten (10), Handlungsanweisungen, insbesondere das bestellen von Tonerkartuschen und/oder Beauftragung von Servicetätigkeiten, durchführbar sind.

## Geänderte Patentansprüche

### Geänderte Patentansprüche gemäss Regel 137(2) EPÜ.

1. Verfahren zur Abfrage von technischen Informationen von Druckgeräten (1) und Übermittlung dieser Informationen an einen Erfassungsclienten (4), welcher ein Datensammler, bevorzugt mit integrierter Datenbank, ist, wobei die gesammelten Informationen an eine zentrale Datenverarbeitungseinheit, insbesondere einer privaten Cloud (2), zu welcher Dritte keine Zugriffsberechtigung haben, übersendet werden, wobei die technischen Informationen von Druckgeräten (1) in Form von OID-Werten (10) erfasst werden und mittels MIB-Daten (12) ausgewertet werden,
**dadurch gekennzeichnet, dass** die technischen Informationen, bevorzugt OID-Werte (10), von Druckgeräten (1) innerhalb eines lokalen Netzwerkes (7) mittels UDP/SNMP-Protokollen (6) auf wenigstens ein mobiles Endgerät (11), insbesondere auf eine auf dem wenigstens einen mobilen Endgerät (11) installierten App (5), übertragen werden, welches sich zum Zeitpunkt der Übertragung der technischen Informationen, bevorzugt OID-Werte (10), innerhalb des lokalen Netzwerkes (7) befindet, wobei diese empfangenen technischen Informationen, bevorzugt OID-Werte (10), von diesem wenigstens einen mobilen Endgerät (11), insbesondere von der auf dem wenigstens einen mobilen Endgerät (11) installierten App (5), an eine private Cloud (2), welche einen zentralen Erfassungsclient (4) und einem MPS-Server (3) umfasst, über ein Webinterface (8) übertragen werden, wobei innerhalb dieser privaten Cloud (2) die gesammelten und übersendeten technischen Informationen, bevorzugt OID-Werte (10), der Druckgeräte (1), ausgewertet und gespeichert werden, so dass der zentrale Erfassungsclient (4) mit Hilfe von MIB-Daten (12) selbsttätig Handlungsanweisungen, insbesondere die Abfrage weiterer technischer Informationen, bevorzugt OID-Werte (10), an das wenigstens eine mobile Endgerät, insbesondere auf eine auf dem wenigstens einen mobilen Endgerät (11) installierten App (5) über das Webinterface (8) weiterleitet, wobei dieser zyklische Datenaustausch solange durchgeführt wird, bis die benötigten OID-Werte (10) für eine vollständige Analyse vorliegen.

2. Verfahren nach Anspruch 1, **dadurch gekennzeichnet, dass** ein MPS-Server (3) verwendet wird, welcher innerhalb der privaten Cloud (2), welcher die vom zentralen Erfassungsclient (4) gesammelten und weitergeleiteten OID-Werte (10), empfängt und, basierend auf den ihm zugesendeten OID-Werte (10), statistische Auswertungen stattfinden, so dass Handlungsanweisungen, insbesondere Servicesteuerungen, durchgeführt werden..

3. Verfahren nach einem oder mehreren vorangegangenen Ansprüchen, **dadurch gekennzeichnet, dass** die private Cloud (2) extern, insbesondere über einen Cloudanbieter, als auch intern, betrieben wird.

4. Verfahren nach einem oder mehreren vorangegangenen Ansprüchen, **dadurch gekennzeichnet, dass** sowohl öffentliche MIB-Daten (12), wodurch einheitliche OID-Werte (10) abgefragt werden, als auch private MIB-Daten (12), wodurch hersteller- und gerätespezifischen OID-Werte (10) abgefragt werden, verwendet werden, um individuelle Abfragen und/oder Verarbeitungen der empfangenen und/oder gesendeten OID-Werte (10), in einer privaten Cloud (2), insbesondere auf einem Erfassungsclient (4), durchzuführen.

5. Verfahren nach einem oder mehreren vorangegangenen Ansprüchen, **dadurch gekennzeichnet, dass** nachdem der zentrale Erfassungsclient (4) anhand der gerätespezifischen MIB-Daten (12) die OID-Abfragen an die App (5) weitergeleitet wurden, daraufhin die gerätespezifischen OID-Werte (10), abgefragt und durch wenigstens ein mobiles Endgerät (11), insbesondere innerhalb der auf wenigstens einen mobilen Endgerät (11) installierten App (5), erhalten werden, so dass aufgrund der OID-Werte (10) im Vergleich zu den MIB-Daten (12) erneute OID-Abfragen vom zentralen Erfassungsclient (4) an die App (5) dynamisch unter der Berücksichtigung von MIB-Daten (12) zyklisch solange automatisch erfolgen, bis alle gerätespezifischen OID-Werte aus dem lokalen Netzwerk (7) über die mobile App (5) an den zentralen Erfassungsclient (4) zurückübergeben wurden.

6. Verfahren nach einem oder mehreren vorangegangenen Ansprüchen, **dadurch gekennzeichnet, dass** zwischen dem lokalen Netzwerk (7) und dem Webinterface (8) eine Firewall (9) verwendet wird, so dass keine direkte Kommunikation zwischen dem lokalen Netzwerk (7) und dem Webinterface (8) innerhalb wenigstens einem mobilen Geräts (11), insbesondere innerhalb einer auf wenigstens einem mobilen Geräts (11) installierte App (5), stattfindet.

7. Verfahren nach einem oder mehreren vorangegangenen Ansprüchen, **dadurch gekennzeichnet, dass** innerhalb der App (5), welche auf wenigstens einen mobilen Endgerät (11) installiert ist, eine Anzeige enthalten ist, durch die die individuellen Geräteinformationen nach Abfrage der OID-Werte (10), insbesondere in Form von der aktuellen Tonerfüllmengen, Zählerstände, Fehlermeldungen und alle gerätespezifischen OID-Werte (10) bereitgestellt werden, um basierend auf diesen OID-Werten (10), Handlungsanweisungen, insbesondere das Bestellen von Tonerkartuschen und/oder Beauftragung von Servicetätigkeiten, durchzuführen.
